# EUROPÄISCHE PATENTSCHRIFT

(11) **EP 2 529 265 B1**
(45) Veröffentlichungstag und Bekanntmachung des Hinweises auf die Patenterteilung: **24.08.2016**
(21) Anmeldenummer: 11712155.8
(22) Anmeldetag: 20.01.2011
(51) Int. Cl.: G02B 21/34, G02B 21/00

(54) **MIKROSKOPIE MIT EINEM OBJEKTTRÄGER ODER DECKGLAS MIT PHOTONISCHEM KRISTALL ZUR KONTRASTERHÖHUNG**
MICROSCOPE COMPRISING A SLIDE OR COVER SLIP HAVING A PHOTONIC CRYSTAL FOR INCREASING CONTRAST
MICROSCOPE COMPRENANT PORTE-OBJET OU LAMELLE DOTÉ DE CRISTAL PHOTONIQUE POUR AMÉLIORER LE CONTRASTE

(30) Priorität: 26.01.2010 DE 102010005860
(43) Veröffentlichungstag der Anmeldung: 05.12.2012
(73) Patentinhaber: Christian-Albrechts-Universität zu Kiel, 24118 Kiel (DE)
(72) Erfinder: GERKEN, Martina, 24116 Kiel (DE); NAZIRIZADEH, Yousef, 65193 Wiesbaden (DE)
(74) Vertreter: Hansen, Jochen
(86) Internationale Anmeldenummer: PCT/DE2011/000054
(87) Internationale Veröffentlichungsnummer: WO 2011/091782

(56) Entgegenhaltungen:
- US-A1- 2004 184 129
- US-A1- 2005 142 654
- ZHANG WEI ET AL: "Fluorescence enhancement by a photonic crystal with a nanorod-structured high index layer", APPLIED PHYSICS LETTERS, AIP, AMERICAN INSTITUTE OF PHYSICS, MELVILLE, NY, US, Bd. 93, Nr. 13, 2. Oktober 2008 (2008-10-02), Seiten 133115-133115, XP012111727, ISSN: 0003-6951, DOI: DOI:10.1063/1.2994696
- NAZIRIZADEH Y ET AL: "Optical characterization of photonic crystal slabs using orthogonally oriented polarization filters", OPTICS EXPRESS, OSA (OPTICAL SOCIETY OF AMERICA), WASHINGTON DC, (US), Bd. 16, Nr. 10, 12. Mai 2008 (2008-05-12), Seiten 7153-7160, XP002543945, ISSN: 1094-4087, DOI: DOI:10.1364/OE.16.007153 [gefunden am 2008-05-02]
- NAZIRIZADEH Y ET AL: "Low-cost label-free biosensors using photonic crystals embedded between crossed polarizers", OPTICS EXPRESS OPTICAL SOCIETY OF AMERICA USA, Bd. 18, Nr. 18, 2010, Seiten 19120-19128, XP002635685, ISSN: 1094-4087

## Beschreibung

Die Erfindung betrifft eine Vorrichtung und ein Verfahren, welche den Kontrast von Objekten in der optischen Mikroskopie erhöhen und es dabei gleichzeitig erlaubt das Verhalten an Grenzflächen zu beobachten.

Die Erkennbarkeit von Details in einem Bild hängt von der Auflösung und dem Kontrast des Bildes ab. Insbesondere die Lichtmikroskopie von biologischen Objekten wird in vielen Fällen durch Kontrastarmut der erzeugten Bilder beeinträchtigt, nämlich immer dann, wenn die Objekte nicht durch allgemeine Lichtabsorption (Abdunklung), durch spektral spezifische Lichtabsorption (Eigenfarben) oder durch sehr starke Unterschiede im Lichtbrechungsindex mit ausreichendem Kontrast erscheinen. Deshalb gibt es verschiedene Methoden, um den Kontrast zu erhöhen. Zum Beispiel werden einzelne Objekte oder ihre Bestandteile spezifisch mit Farbstoffen angefärbt. Dabei ist es ein Vorteil, Farben zu wählen, die einen hohen Kontrast zueinander haben, dieses ist z.B. bei Komplementärfarben der Fall. Der Methode der Einfärbung sind aber insbesondere bei Untersuchung von biologischem Lebend-Material Grenzen gesetzt.

Eine andere Methode ist, die Beleuchtungsapertur zu verringern, indem man die Irisblende des Beleuchtungsapparats (des Kondensors) verengt. Dadurch werden Objektteile mit unterschiedlichem Lichtbrechungsindex mit stärkerem Kontrast dargestellt. Dieses Verfahren hat aber den schwerwiegenden Nachteil, dass die Auflösung des Bildes stark verringert wird, denn das Auflösungsvermögen des Mikroskops ist von der numerischen Apertur der Objektbeleuchtung abhängig.

Ein großer Fortschritt in der Kontrasterhöhung war die Erfindung des Phasenkontrastmikroskops durch Frits Zernike, welches ihm 1953 den Nobelpreis einbrachte. Mit dem Phasenkontrastmikroskop gelingt es den Hell-Dunkel-Kontrast zu vergrößern ohne dabei das Auflösungsvermögen wesentlich zu reduzieren. Beim Phasenkontrastmikroskop wird der Phasenunterschied, der sich ergibt wenn Licht durch ein Medium mit höherem Brechungsindex als die Umgebung fällt genutzt. Durch gezielte Beeinflussung der Phasenlage des Hintergrundlichtes unabhängig vom Objektlicht gelingt die Erhöhung des Kontrastes. Für die Beeinflussung des Hintergrundlichtes wird dabei ein so genannter Phasenring verwendet.

Photonische Kristalle verfügen über eine periodische Struktur des Brechungsindex, welche durch Beugung und Interferenz die Ausbreitung von Photonen beeinflussen. In photonischen Kristallen können sich in Abhängigkeit von geometrischen und Materialparametern Resonanzen bilden. Eine besondere Kategorie stellen die planaren photonischen Kristalle dar. Diese bestehen in der Regel aus einer dünnen Schicht eines Dielektrikums, in das die Nanostrukturierung eingebracht ist und welches von Materialien mit niedrigerem Brechungsindex umgeben ist.

Aus "Super-resolution optical microscopy based on photonic crystal materials" Phys. Rev. B72, 085442 (2005) ist bekannt, die Auflösung bei der optischen Mikroskopie, insbesondere bei Verwendung monochromatischen Lichtes, durch photonische Kristalle zu verbessern.

Die DE 10 2007 016 588 A1 beschreibt photonische Kristalle als Linsen zur Verbesserung der Auflösung bei Strukturen in der Größenordnung der Wellenlänge des Lichtes.

Aus der US 2009/0040601 A1 ist ein Polarisationsmikroskop bekannt, welches über einen photonischen Kristall zur Korrektur der Wellenlänge des Lichtes verfügt.

Weiterer Stand der Technik ist bekannt aus Y. Nazirizadeh et al., Optics Express, Bd. 16, Nr. 10 (2008), S. 7153 - 7160.

Bei der Betrachtung biologischen Materials ist es oft von großer Bedeutung nur einen bestimmten Ausschnitt aus einer Probe zu betrachten. Zum Bespiel wenn das Verhalten von Zellen an Grenzflächen beobachtet werden soll, bei der Lichtmikroskopie wirken hier die weiteren in der Probe vorhandenen Zellen als störend, es kommt zu Überlagerungen. Die Abtrennung und separate Betrachtung der Grenzfläche und ihrer Prozesse führt dabei zu Verfälschungen des Ergebnisses da z.B. die natürliche Beweglichkeit nicht mehr gegeben ist. Das Verhalten von Zellen an Grenzflächen ist z.B. dann interessant, wenn die Zellen sich z.B. bei Verlust ihrer Vitalität vom Boden eines Behälters lösen.

Es ist Aufgabe der Erfindung eine Vorrichtung bereitzustellen, welche es ermöglicht,
a) das Verhalten an Grenzflächen optisch zu beobachten,
b) den Kontrast insbesondere bei der Untersuchung transparenten Materials zu erhöhen,
c) sowie eine optimale, kontrastreiche Farbgebung zu ermöglichen, ohne auf bereits bekannte teilweise sehr teure und aufwendige Verfahren zurückzugreifen, wie z.B. Methoden der Einfärbung durch Zusatz von Farbstoffen.

Die Aufgabe wird gelöst durch die im ersten Anspruch beschriebene Vorrichtung sowie die in den Ansprüchen beschriebenen Verfahren.

Erfindungsgemäß wird in den optischen Strahlengang ein Element eingeführt, das aus einer nanostrukturierten Oberfläche, welche zwischen zwei gekreuzten Polarisationsfiltern angeordnet ist, besteht, dabei muss erfindungsgemäß ein direkter Kontakt der zur untersuchenden Probe mit der nanostrukturierten Oberfläche hergestellt werden.

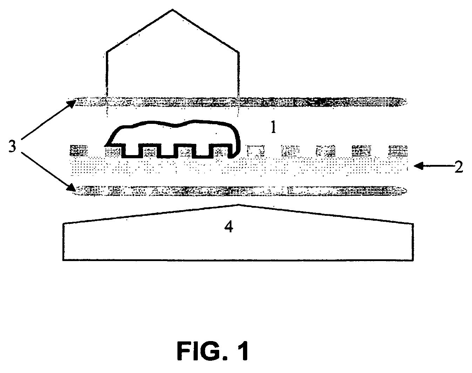

Fig. 1 zeigt eine schematische Darstellung der erfindungsgemäßen Vorrichtung. Das zu untersuchende biologische Material 1 (Objekt) wird direkt auf die nanostrukturierte Oberfläche 2 gebracht, welche zwischen zwei gekreuzten Polarisationsfiltern 3 platziert ist.

Die nanostrukturierte Oberfläche verfügt über periodisch angeordnete Hohlräume, die mit einem Fluidum d.h. einem Gas, insbesondere Luft, oder einer Flüssigkeit, insbesondere einer wässrigen Lösung gefüllt sind. In planaren photonischen Kristallen können sich in Abhängigkeit von geometrischen und Materialparametern Resonanzen bilden. Diese Resonanzen sind mit einer Transmissionsmessung messbar, jedoch mit einem störenden Anteil der Lichtquelle überlagert. Platziert man zwei gekreuzte Polarisationsfilter vor und nach dem photonischen Kristall, werden nur die Resonanzen transmittiert.

Das transmittierte Licht ist somit ein "Fingerabdruck" des photonischen Kristalls. Ändern sich nun Parameter des Kristalls, wie z.B. der Brechungsindex an der Oberfläche (durch Vorhandensein von Objekten), ändert sich auch dieser Fingerabdruck.

Derartige planare photonische Kristalle lassen sich z. B. mittels Heißprägen auf eine sehr kostengünstige Art herstellen. Dabei wird ein Stempel mit der gewünschten Nanostrukturierung unter Druck und Hitze auf ein geeignetes Substratmaterial gepresst.

Es hat sich nun gezeigt dass man diesen Effekt in nicht zu erwartender Art und Weise zur Erhöhung des Kontrastes in der optischen Mikroskopie verwenden kann.

Wählt man die Luftlöcher in so einem Kristall z. B. zu groß, kommt es aufgrund des niedrigen effektiven Brechungsindexes nicht zu Resonanzbildung. Es wird bei gekreuzter Stellung der Polarisationsfilter kein Licht transmittiert. Mit einem Objekt auf der Oberfläche jedoch kann sich der effektive Brechungsindex erhöhen und es kommt Resonanzbildung. So wird nur an Stellen mit verändertem Brechungsindex der Oberfläche Licht transmittiert.

Ein entscheidender Vorteil des erfindungsgemäßen Verfahrens und der erfindungsgemäßen Vorrichtung ist die Tatsache, dass die Eindringtiefe dieser Resonanzen aus dem photonischen Kristall in das biologische Material durch Wahl des photonischen Kristalls steuerbar ist. Es sind somit nur Objekte in diesem Bereich sichtbar. Alle Objekte, die sich in größerer Entfernung zur Oberfläche des photonischen Kristalls befinden, sind mit dieser erfindungsgemäßen Vorrichtung und mit dem erfindungsgemäßen Messverfahren nicht sichtbar und tragen daher in keiner Weise zu störenden Effekten bei. Es ist somit möglich, Vorgänge an der Oberfläche ohne störende Einflüsse zu beobachten. Der ausgewählte Sichtbereich kann dabei in Abhängigkeit von dem zu beobachtenden Objekt / Vorgang gewählt werden. Bevorzugt wird dieser Bereich zwischen 1 und 2000 nm liegen, besonders bevorzugt im Bereich 10 bis 200 nm.

Ist die Distanz vom Objekt zur Oberfläche größer als diese Eindringtiefe, erfährt das Objekt ebenfalls keine Kontrasterhöhung.

Als Materialien für planare photonische Kristalle kommen alle transparenten Materialien in Frage, wie zum Beispiel Metalloxide, Halbleiter, Glas oder Polymere. Als Substrat für solche Strukturen können Materialien eingesetzt werden, die einen niedrigeren Brechungsindex als der photonische Kristall aufweisen.

In einer besonderen Ausführungsform können die photonischen Kristalle an der Oberfläche derart funktionalisiert sein, das nach Inkontakttreten mit dem zu untersuchenden Material eine Änderung des Brechungsindex, welche zur Resonanz führt, auftritt.

Die Funktionalisierung kann z.B. ein Substrat oder Antikörper sein, der bestimmte Komponenten des zu untersuchenden Materials zu binden vermag.

Als Polarisationsfilter kommen dabei alle optisch transparenten Medien, welche nur elektromagnetische Wellen einer bestimmten Polarisation durchlassen in Frage. Es können beispielsweise Polarisationsfolien oder höherwertigere Polarisatoren in Glas verwendet werden.

In einer besonders vorteilhaften Ausführungsform können die photonischen Kristalle direkt auf den zur Mikroskopie verwendeten Objektträger aufgebracht sein.

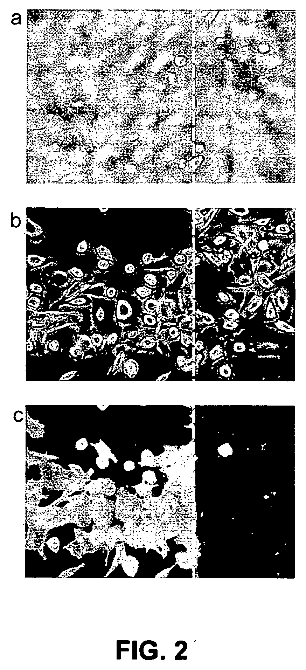

Die Erfindung wird anhand eines Ausführungsbeispiels näher erläutert. In Fig. 2 sind Lungenkarzinomzellen zum Teil auf einem planaren photonischen Kristall (c), zum Teil auf einer nicht strukturierten Oberfläche mit unterschiedlichen Mikroskopiearten bei 20-facher Vergrößerung gezeigt. Der hier verwendete planare photonische Kristall besteht aus einer Niobpentoxid Schicht auf einem Quarz Substrat. In diese Schicht sind Löcher in einer triangularen Anordnung eingebracht. Unter dem Lichtmikroskop (Fig. 2a) ist die Transparenz dieser Zellen hinderlich, um ihren Umriss eindeutig zu erkennen. Anders ist es bei dem Phasenkontrastmikroskop, dieses benutzt diverse Blenden und eine aufwendige Optik, um die transparenten Zellen sichtbar zu machen (Fig. 2b). Mit gekreuzten Polarisationsfiltern und konventionelle Lichtmikroskopie erhalten wir mit der erfindungsgemäßen Vorrichtung (c) eine Kontrasterhöhung nach der oben beschriebenen Methode, jedoch ohne teuere Optik. Die hier eingesetzten Polarisationsfolien weisen einen Extinktionskoeffizient von 8.500:1 auf. Die Farbe der Zellen, ist durch die geometrischen Parameter des photonischen Kristalls gegeben, wobei fast alle Farben realisierbar sind.

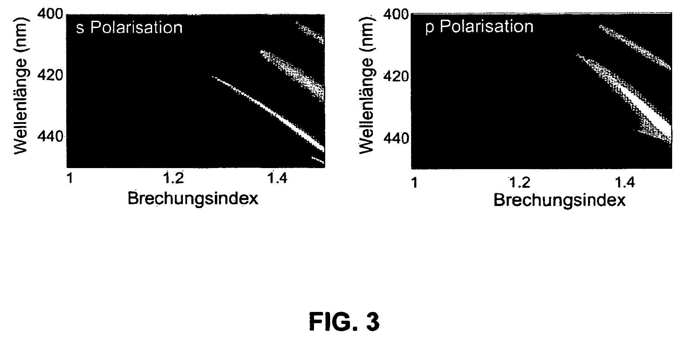

Um diese Ergebnisse theoretisch zu bestätigen, wurden Transmissionssimulationen mit der Finite-Differenzen-Methode im Zeitbereich durchgeführt. In Fig. 3 sind die Resonanzen im photonischen Kristall abhängig von dem Brechungsindex der Umgebung gezeigt. Mit steigendem Brechungsindex sind zum einen eine Verschiebung dieser Resonanzen und zum anderen eine Intensitätszunahme zu beobachten. So sind bei einem Brechungsindex von 1, welcher dem von Luft entspricht, keine Resonanzen zu erkennen. Bei einem Brechungsindex von 1,5, der etwa der Brechungsindex von Zellen ist, bilden sich 5 Resonanzen, die dazu beitragen, dass an dieser Stelle Licht transmittiert wird.

### Bezugszeichenliste:

- 1: zu untersuchendes Material (Objekt)
- 2: photonischer Kristall
- 3: Polarisationsfilter

## Patentansprüche

1. Mikroskop mit
- einer Linsensoptik,
- einer in die Linsenoptik Licht einstrahlenden Lichtquelle (4),
- einem zwischen Lichtquelle (4) und Linsenoptik angeordneten Objekttisch zur Aufnahme eines zu mikroskopierenden Objekts,
- einem zwischen der Lichtquelle (4) und dem Objekttisch angeordneten ersten Polarisationsfilter (3),
- einem zwischen dem Objekttisch und der Linsenoptik angeordneten, zum ersten Polarisationsfilter um 90° gedrehten zweiten Polarisationsfilter (3), und
- einem im Strahlengang angeordneten photonischen Kristall, der durch Nanostrukturierung der Oberfläche in einem Bereich eines Objektträgers oder Dechglases gebildet ist, wobei die Oberfläche des photonischen Kritalls über periodisch angeordnete Hohlräume verfügt,
wobei der photonische Kristall in Kontakt mit dem Objekt gebracht ist,
woloei das Objekt ein biologisches Material ist, und wobei
die Resonanzen des photonischen Kristalls im sichtbaren Lichtspektrum liegen und erst bei Aufhringen des Objekts durch Änderung des Brechungsindex an der Oberfläche des photonischen Kristalls entstehen.

2. Anordnung nach Anspruch 1,
**dadurch gekennzeichnet, dass**
der photonische Kristall ein planarer photonischer Kristall ist.

3. Anordnung nach einem der vorhergehenden Ansprüche,
**dadurch gekennzeichnet, dass**
der Objektträger mit dem photonischen Kristall beschichtet ist.

## Claims

1. A microscope with
- a lens system,
- a light source (4) which radiates light into the lens system,
- an object stage, arranged between the light source (4) and the lens system, for receiving an object which is to be examined by microscope,
- a first polarisation filter (3) arranged between the light source (4) and the object stage,
- a second polarisation filter (3) arranged between the object stage and the lens system, and turned by 90° relative to the first polarisation filter, and
- a photonic crystal arranged in the beam path, which is formed by nanostructuring of the surface in a region of a microscope slide or cover slip, the surface of the photonic crystal having periodically-arranged cavities,
wherein the photonic crystal is brought into contact with the object,
wherein the object is a biological material, and wherein
the resonances of the photonic crystal lie in the visible light spectrum,
and only arise when the object is applied by changing the refractive index on the surface of the photonic crystal.

2. An arrangement according to Claim 1,
**characterised in that** the photonic crystal is a planar photonic crystal.

3. An arrangement according to one of the preceding claims,
**characterised in that** the microscope slide is coated with the photonic crystal.

## Revendications

1. Microscope avec
- une optique à lentilles,
- une source lumineuse (4) envoyant de la lumière dans l'optique à lentilles,
- une platine porte-échantillon disposée entre la source lumineuse (4) et l'optique à lentilles et destinée à recevoir un objet à observer au microscope,
- un premier filtre polarisant (3) disposé entre la source lumineuse (4) et la platine porte-échantillon,
- un deuxième filtre polarisant (3) disposé entre la platine porte-échantillon et l'optique à lentilles et tourné de 90° par rapport au premier filtre polarisant, et
- un cristal photonique disposé dans la trajectoire du faisceau et qui est formé par une nanostructuration de la surface dans une zone d'une lame ou d'une lamelle, la surface du cristal photonique présentant des cavités disposées régulièrement,
le cristal photonique étant mis en contact avec l'objet,
l'objet étant un matériau biologique et
les résonnances du cristal photonique se situant dans le spectre de la lumière visible et n'apparaissant que lors de l'application de l'objet par modification de l'indice de réfaction à la surface du cristal photonique.

2. Arrangement selon la revendication 1, **caractérisé en ce que** le cristal photonique est un cristal photonique plan.

3. Arrangement selon l'une des revendications précédentes, **caractérisé en ce que** la lame est revêtue du cristal photonique.
